# EUROPÄISCHE PATENTSCHRIFT

(11) **EP 0 458 310 B1**
(45) Veröffentlichungstag und Bekanntmachung des Hinweises auf die Patenterteilung: **07.09.1994**
(21) Anmeldenummer: 91108293.1
(22) Anmeldetag: 23.05.1991
(51) Int. Cl.: A23C 1/04, A23C 11/00, A23C 11/04, A23C 11/08, A23L 3/46

(54) **Pulverförmige Mischung für die Zubereitung von Kaffeegetränken, Verfahren und Vorrichtung zu deren Herstellung**
Powdery composition for the preparation of coffee beverages, process and device for the production thereof
Produit pulvérulent pour préparer des boissons à la base du café, procédé et appareil pour sa mise en oeuvre

(30) Priorität: 25.05.1990 DE 4016783; 13.10.1990 DE 4032537
(43) Veröffentlichungstag der Anmeldung: 27.11.1991
(73) Patentinhaber: Kraft Jacobs Suchard SA, CH-8008 Zürich (CH)
(72) Erfinder: Vogt, Siegfried, W-2804 Lilienthal (DE); Assenmacher, Ute, W-2800 Bremen 1 (DE); Hupe, Almut, W-2800 Bremen (DE)
(74) Vertreter: Bolte, Erich, Dipl.-Ing.

(56) Entgegenhaltungen:
- DE-A- 2 625 104
- US-A- 3 738 412
- US-A- 4 438 147

## Beschreibung

Die Erfindung betrifft eine pulverförmig Mischung unter Verwendung eines schäumenden Kaffeeweißers zum Herstellen von Kaffeegetränken des Typs Cappuccino. Weiterhin bezieht sich die Erfindung auf einen schäumenden Kaffeeweißer in Pulverform, ein Verfahren und eine Vorrichtung zu seiner Herstellung und ein flüssiges Gemisch als Zwischenprodukt des Herstellungsverfahrens.

Kaffeeweißer dienen seit einiger Zeit als Milchersatzprodukte. Sie werden flüssig und in Pulverform vertrieben. Nach Ihrer Zugabe zu Kaffeegetränken verleihen sie diesen das Aussehen eines Milchkaffees. Für pulverförmige Weißmacher werden hochschmelzende Fette mit Schmelzpunkten von 43° C - 46° C benutzt, von deren Qualität die Weißkraft der pulverförmigen Zusammensetzung maßgeblich abhängt.

Ein schäumendes Kaffeegetränk von Typ Cappuccino läßt sich mit den üblichen Weißmachern nicht bereitstellen.

Aus der US-PS 4 438 147 sind ein pulverförmiger schäumender, zur Verwendung in Getränken geeigneter Creamer und ein Verfahren zu seiner Herstellung bekannt. Der dort beschriebene Creamer enthält einen Anteil an getrockneter Magermilch zwischen 0 % und 50 %. Weiterhin weist das obige Produkt einen hohen Fettgehalt auf, der zwischen 20 % und 50 %, vorzugsweise zwischen 40 % und 50 %, liegt. Lactose ist alleine aufgrund der in der trockenen Magermilch enthaltenen Lactose vorhanden.

Der Erfindung liegt deshalb die Aufgabe zugrunde, eine pulverförmige Mischung für die Zubereitung eines Cappuccino-Getränks unter Verwendung eines schäumenden Kaffeeweißers aus Magermilchkonzentrat als Hauptbestandteil bereitzustellen, sowie ein Verfahren und eine Vorrichtung zur Herstellung des schäumenden Kaffeeweißers zu schaffen.

Diese Aufgabe wird durch eine pulverförmige Zusammensetzung gemäß Anspruch 1 sowie durch die kennzeichnenden Merkmale der Ansprüche 4 bzw. 18, und zwar sowohl in verfahrens- als auch in vorrichtungstechnischer Hinsicht gelöst.

Vorzugsweise erfolgt das Anmischen der Bestandteile des erfindungsgemäßen Kaffeeweißers als wässrige Mischung in der Weise, daß zunächst Wasser mit einer Temperatur von 60°C vorgelegt wird. Über eine Mischdüse werden sodann Lactose, Natriumcaseinat und Phosphat zugeführt. Anschließend wird Magermilchkonzentrat zugemischt. Schließlich wird das geschmolzene (gehärtete) Pflanzenfett, insbesondere Sojafett oder Palmfett oder Kokosfett dem Magermilchkonzentrat in flüssigem Zustand zugegeben.

Es wird ein Magermilchkonzentrat mit einem Milch-Trockenmassegehalt von 20 % bis 39 %, vorzugsweise 37,5 % TM, eingesetzt. Lactose dient zur Geschmacksbildung, als Trägermaterial für andere Inhaltsstoffe und gegebenenfalls als Füllstoff. Sie wird vorzugsweise in der Mischung in einer Menge von 25 % bis 35 %, bezogen auf die Trockenmasse, verwendet. Als Pflanzenfette können vorzugsweise Kokosnuß- oder Sojafett in einer Menge von 10 % bis 20 %, bezogen auf die Trockenmasse, eingesetzt werden. Sie führen zu einer erhöhten Cremigkeit des Getränks und bei einer sehr feinen Verteilung zu einer erhöhten Weiße des Schaums. Natriumcaseinat, das als Stabilisator während der Sprühtrocknung und beim Aufguß des Getränks die Koaleszenz verhindert, wird vorzugsweise in einer Menge von 1,5 % bis 2,0 %, bezogen auf die Trockenmasse, eingesetzt. Zur Verhinderung der Koagulation von Proteinen wird vorzugsweise Dinatriumorthophosphat in einer Menge von 0,25 % bis 0,8 %, bezogen auf die Trockenmasse, verwendet. Die fertig angemischte, flüssige Mischung wird auf einen Trockenmassegehalt von 30 % bis 47 %, vorzugsweise 41 %, eingestellt, wobei auf die jeweils zur Sprühtrocknung zu verwendende Düse abzustimmen ist.

Das Gemisch wird vorzugsweise bei 75°C bis 80°C während eines Zeitraums von 45 min bis 90 min, insbesondere während eines Zeitraums von 60 min, pasteurisiert.

Die Mischung wird vorzugsweise zwei- oder dreistufig unter einem Druck von 35 bar bis 175 bar homogenisiert. Bei einer zweistufigen Homogenisierung wird es bevorzugt, in der ersten Homogenisierungsstufe einen Druck von 120 bar bis 175 bar, vorzugsweise 150 bar, und in der zweiten Stufe einen Druck von 35 bar bis 45 bar, vorzugsweise 35 bar, anzuwenden. Erfolgt die Homogenisierung dreistufig, wäre in der dritten Stufe ein Druck von etwa 25 bar bis 35 bar bevorzugt. Die Homogenisierung der Mischung bezweckt die Feinstverteilung des Fetts in der Flüssigkeit. Dies hat eine erhöhte Weiße des Schaums im Getränk, eine erhöhte Stabilität der Flüssigkeit gegen Koaleszenz vor und während des späteren Sprühvorgangs und eine erhöhte Stabilität des Schaums in der Tasse zur Folge.

Vorzugsweise wird dann die Mischung mit einer Temperatur von 70°C bis 80°C in einen Sprühturm geleitet. Als besonders vorteilhaft erwies es sich, daß ungekühlte Produkt unmittelbar nach dem Homogenisieren mit einem Druck von 45 bar und einem Volumenstrom von 1400 kg/Std. zum Sprühturm zu leiten. Soll die Sprühtrocknung jedoch erst später erfolgen, wird es bevorzugt, die Mischung abzukühlen. Soll die Mischung kalt versprüht werden, ist eine Abkühlung unumgänglich. In diesem Fall wird eine Temperatur von 10°C bis 45°C oder in ganz besonderer Weise 15°C bis 40°C bevorzugt.

Die Eigenschaften des Endprodukts sind in ganz besonderer Weise von der Art der Sprühtrocknung und der Einführung eines Gases in die Mischung abhängig. Als Gase werden vorzugweise Stickstoff oder Kohlendioxid eingesetzt, die unmittelbar vor der Sprühdüse in die Druckleitung unter feinster Verteilung innerhalb der Leitung bzw. innerhalb der Mischung eingepreßt werden. Eine Feinstverteilung wird vorzugsweise durch einen Sintermetallkörper, der in der Mündung der Gasleitung angeordnet ist, erreicht. Das Druckverhältnis der eingepreßten Mischung zu dem eingepreßten Gas wird auf 1 zu 1,1 bis 2, vorzugsweise auf 1 zu 1,1 bis 1,6 eingestellt. In die zur Sprühdüse strömende Mischung wird das Gas in einem Winkel von 30° bis 80°, vorzugsweise 40° bis 60°, eingepreßt.

Die erfindungsgemäßen schäumenden Kaffeeweißer zeichnen sich durch eine hohe Weißkraft und eine starke Schaumbildung aus. Die starke Schaumbildung wird durch feinste Verteilung des Gases in dem zur Sprühdüse strömenden Gemisch erreicht. Unter dem Mikroskop sind voluminöse Agglomerationen von blasigen Kügelchen zu erkennen. Magermilchkonzentrat ist darüber hinaus ein kostengünstiges Ausgangsprodukt zur Herstellung des erfindungsgemäßen schäumenden Kaffeeweißers. Es ist nicht lediglich ein Milchersatzprodukt, was zur geschmacklichen Güte des schäumenden Getränks erheblich beiträgt.

Weitere Merkmale, Einzelheiten und Vorteile der Erfindung werden anhand einiger bevorzugter Ausführungsbeispiele bzw. Vergleichsbeispiele im einzelnen erläutert und anhand weiterer Ausführungsformen der Erfindung mit der dazugehörigen Zeichnung näher beschrieben. Hierbei zeigen:
- Fig. 1: eine schematische Darstellung einer Ausführungsform einer erfindungsgemäß ausgebildeten Vorrichtung zur Herstellung des schäumenden Kaffeeweißers nach der Erfindung;
- Fig. 2: einen teilweisen Mittelschnitt durch eine Leitung der erfindungsgemäßen Vorrichtung im Bereich des Ausschnitts II in vergrößerter Darstellung mit einer Ausführungsform einer erfindungsgemäßen Imprägnierungsdüse; und
- Fig. 3: einen teilweisen Mittelschnitt durch eine Leitung der erfindungsgemäßen Vorrichtung entsprechend Fig. 2 in vergrößerter Darstellung mit einer anderen Ausführungsform einer erfindungsgemäß ausgebildeten Imprägnierungsdüse.

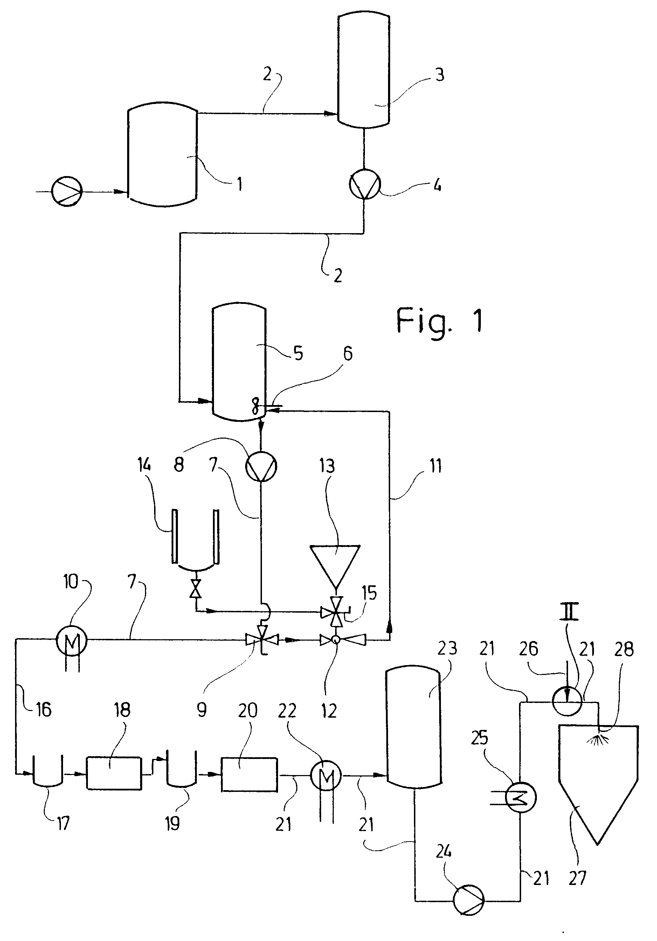

Wie in Fig. 1 dargestellt ist ein Verdampfer 1, in welchen Magermilch oder dergleichen mittels eines Förderorgans in Form einer Pumpe einbringbar ist, über eine Leitung 2, in der ein Konzentrattank 3 sowie eine Pumpe 4 angeordnet sind, mit einem Mischtank 5 verbunden. Von dem Konzentrattank 3 wird das durch den Verdampfer erhaltene Magermilchkonzentrat mit einem Trockenstoffgehalt von 37,5 % aufgenommen und hierin quasi als Puffer gespeichert. Der Mischtank 5 selbst ist mit einem Rührer, Rührwerk 6 oder dergleichen versehen, welches eine gleichmäßige Durchmischung des Produktes gewährleistet.

In einer Leitung 7, die den Mischtank 5 mit einem Wärmetauscher 10 verbindet, ist eine Abzweigung in Form eines Dreiwegeventils 9 vorgesehen. Von dem Dreiwegeventil 9 zweigt eine weitere, zweite Leitung 11 ab, die ebenfalls mit dem Mischtank 5 in Verbindung steht. Über die zweite Leitung 11 kann auf diese Weise das aus dem Mischtank 5 über eine Pumpe 8 geförderte, durchmischte Produkt in den Mischtank 5 zurückgeführt werden. Durch eine derartige Führung des aus dem Mischtank 5 abgezogenen Magermilchkonzentrats im Kreislauf wird zusätzlich zu der vergleichmäßigenden Wirkung des Rührwerks 6 im Mischtank 5 eine homogene Verteilung der Inhaltsstoffe während des Einmischens sichergestellt.

Weiterhin ist die zweite Leitung 11 mit einem Strahlmischer 12 versehen, über den Trockenstoffe aus einem Trockenstoffbehälter 13 und/oder fließfähiges Pflanzenfett aus einem Schmelzbehälter 14 ansaug- bzw. einbringbar sind. Um ein exaktes Dosieren der verschiedenen Inhaltsstoffe der Mischung zu ermöglichen, sind Strahlmischer 12, Trockenstoffbehälter 13 sowie Schmelzbehälter 14 miteinander über ein Dreiwegeventil 15 verbunden. Zusätzlich ist dem Schmelzbehälter 14 ein weiteres Ventil zugeordnet. Damit das Fett bzw. Pflanzenfett beim Schmelzvorgang in seiner chemischen Zusammensetzung, in seinem Geschmack und ähnlichem nicht beeinträchtigt wird, ist nach Möglichkeit der Schmelzbehälter 14 mit einer Temperatur von maximal 65°C zu betreiben. Das geschmolzene Fett soll vor der Verarbeitung nicht länger als 30 min bei der erhöhten Temperatur gehalten werden.

Die auf diese Weise fertiggestellte Mischung wird sodann bei entsprechender Stellung des Dreiwegeventils 9 über die Leitung 7 dem Wärmetauscher 10 zu deren Pasteurisierung bei einer Temperatur von etwa 75°C bis 80°C über einen Zeitraum von vorzugsweise 60 min zugeführt. Die auf diese Weise pasteurisierte Mischung wird zwei hintereinandergeschalteten, dem Wärmetauscher 10 nachgeordneten und zur Homogenisierung dieser erhaltenen Mischung vorgesehenen Homogenisierungsstufen 18, 20 zugeleitet. Hierfür ist eine Leitung 16 zwischen dem Wärmetauscher 10 und der ersten Homogenisierungsstufe 18 vorgesehen. Bei der vorliegenden Ausführungsform ist darüber hinaus jeder der beiden Homogenisierungsstufen 18, 20 ein Vorlaufbehälter 17, 19 vorgeordnet, die als Puffer dienen. Im übrigen kann der zweiten Homogenisierungsstufe 20 mindestens eine weitere - nicht dargestellte - Homogenisierungsstufe nachgeordnet sein.

In einer Leitung 21 zwischen der zweiten Homogenisierungsstufe 20 und der Sprühtrocknungskolonne 27 sind ein Wärmetauscher 22, ein Vorlauftank 23, eine sich hieran anschließende Pumpe 24 oder dergleichen sowie ein Wärmetauscher 25 nachfolgend in Reihe geschaltet. Der Wärmetauscher 22 ist zur Kühlung der homogenisierten Mischung vorgesehen, sofern diese in der Sprühtrocknungskolonne 27 kalt versprüht werden soll oder nicht direkt im Anschluß an die Homogenisierung versprüht werden kann. In dem Vorlauftank 23 wird die homogenisierte, d.h. flüssige, Mischung zur Sprühtrocknung bereitgestellt. Durch den der Pumpe 24 oder einem ähnlichen Förderorgan nachgeschalteten Wärmetauscher 25 kann die aus dem Vorlauftank 23 abgezogene homogenisierte Mischung gegebenenfalls vor der Sprühtrocknungskolonne 27 auf eine gewünschte Temperatur, beispielsweise auf Eintrittstemperaturen zwischen 10°C und 70°C, erwärmt werden. Der Druck in der Leitung 21 zwischen dem Vorlauftank 23 und der Sprühtrocknungskolonne 27 beträgt etwa 30 bar bis 50 bar, vorzugsweise etwa 45 bar.

In der Leitung 21 zwischen der letzten Homogenisierungsstufe 20 und der Sprühtrocknungskolonne 27 ist eine als CO₂- oder N₂-Imprägnierungseinrichtung vorgesehene Düse 26 angeordnet, und zwar unmittelbar vor der Sprühtrocknungskolonne 27, beispielsweise etwa in einem Abstand von 1 m. Über die Düse 26, die mit einer Druckleitung 30 oder dergleichen verbunden ist, wird das ausgewählte Gas, entweder CO₂ oder N₂, mit einem Druck von etwa 5o bar in den Produktstrom bzw. in die an der Düse 26 vorbeiströmende Mischung eingeleitet.

An die Leitung 21 ist schließlich die Sprühtrocknungskolonne 27 gekoppelt, an deren Eingang eine ins Innere weisende Sprühtrocknungsdüse 28 angeordnet ist. Die Sprühtrocknung erfolgt somit im Gleichstromverfahren bei einem Druck von 25 bis 40 bar, wobei die Lufteintrittstemperatur etwa 180°C bis 200°C, vorzugsweise 185°C, und die Luftaustrittstemperatur maximal ca. 100°C, vorzugsweise 95°C, betragen. Die Sprühtrocknungsdüse 28 ist dabei als Einstoffdüse mit einem Durchmesser von ca. 1 mm bis 5 mm ausgebildet.

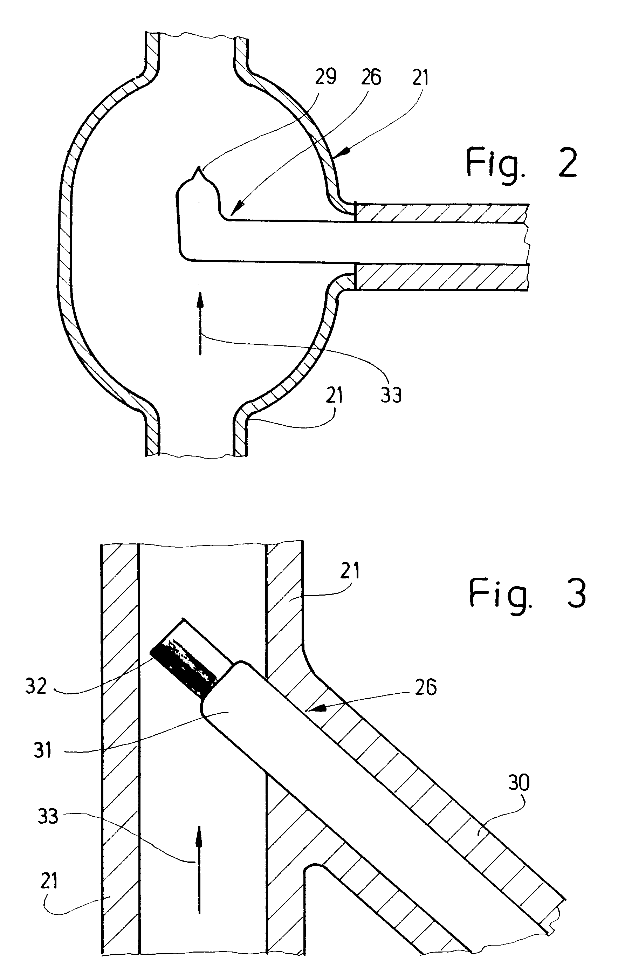

In Fig. 2 ist eine Ausführungsform der Düse 26 nach der Erfindung gezeigt, die als CO₂- oder N₂-Imprägnierungseinrichtung für die vorbeiströmende Mischung in der Leitung 21 mittig, vom Seitenumfang hineinragend angeordnet ist. Die Leitung 21 weist in diesem Bereich einen geringfügig vergrößerten Durchmesser auf, um etwa gleichmäßige Strömungsverhältnisse und damit geeignete Sprühbedingungen zu schaffen. Die Düse 26 ist hier als Sprühkegeldüse 29 ausgebildet, mit der sich ein Sprühwinkel von etwa 30°C bis 80°C, vorzugsweise von ca. 40°C bis 60°C, erreichen läßt. Weiterhin ist die Sprühkegeldüse 29 in Strömungsrichtung der Mischung ausgerichtet, so daß das eingeleitete Gas, d.h. das CO₂ bzw. N₂, im wesentlichen ebenfalls in Strömungsrichtung (Pfeil 33) der Mischung in die Leitung 21 eingeführt wird.

Nach Fig. 3 ist die Düse 26 als im wesentlichen in Strömungsrichtung der Mischung weisende Zuführleitung 30 für das CO₂ oder N₂ ausgebildet, wobei an dem Ende 31 der Zuführleitung 30 ein Verteilerkörper 32 angebracht ist, der in die Strömungsbahn (Pfeil 33) der homogenisierten Mischung hineinragt. Der Verteilerkörper 32 besteht beispielsweise aus Sintermetall , so daß durch dessen sehr kleine Austrittsöffnungen das CO₂ oder N₂ in der Mischung nahezu molekular verteilt wird. Anstatt des Verteilerkörpers 32 gemäß Fig. 3 aus Sintermetall ist es ebenso möglich, den Verteilerkörper 32 mit feinsten Poren zu versehen, die durch Laserstrahlen erzeugt sind. Hierdurch ergibt sich ein Durchströmen durch den Verteilerkörper 32 von CO₂ oder N₂ in den Abmessungen der jeweiligen Molekularstruktur. Dies führt ebenfalls zu einer ausgesprochen guten Verteilung des Gases in der Mischung.

### Beispiel 1

Nach der folgenden Rezeptur wurde eine flüssige Mischung der Komponenten in Wasser hergestellt und diese anschließend sprühgetrocknet.

| Inhaltsstoffe | Gewichts-% Trockenmasse |
|---|---|
| Magermilchtrockenmasse | 44,58 |
| Lactose | 27,87 |
| Pflanzenfett | 27,25 |
| Dinatriumorthophosphat | 0,30 |

Das Pflanzenfett wurde in einer Fettschmelzvorrichtung verflüssigt. Dinatriumorthophosphat wurde mit Lactose vorgemischt, um eine gleichmäßige Verteilung nach dem Einmischen in die flüssig Mischung zu gewährleisten.

Die auf 32 % Trockenmasse aufkonzentrierte Magermilch mit einer Temperatur von 50°C wurde über Rohrleitungen in den Kreislauf gepumpt. Das flüssige, heiße Pflanzenfett (Temp. ca. 70°C) wurde über einen Strahlmischer in den umlaufenden Produktstrom eingezogen. Anschließend wurden die Trockenstoffe eingezogen.

Die gut durchmischte Mischung, die nun einen TS-Gehalt von 51,35 % aufwies, wurde 20 Minuten bei 78°C pasteurisiert und anschließend homogenisiert. Die Homogenisierung erfolgte dreistufig:

| | |
|---|---|
| - 1. Stufe: | 50 bar |
| - 2. Stufe: | 120 bar |
| - 3. Stufe: | 30 bar |

Die anschließend auf 15°C gekühlte Mischung wurde unter einem Druck von etwa 25 bar der Düse zugeführt. Etwa einen Meter vor der Düse wurde das Produkt mit CO₂ versetzt, welches mit einem Druck von 45 bar über ein Sintermetall eindosiert wurde. Das Mischungsverhältnis betrug 0,45 kg CO₂ auf 1000 kg Trockenstoff in der flüssigen Mischung.

Die Sprühtrocknung erfolgte über eine Düse, deren Öffnung einen Durchmesser von 3,0 mm aufwies. Das Produkt wurde konisch versprüht mit einem inneren Sprühwinkel von 88°. Die Sprühbedingungen waren wir folgt:
- Temperatur der Luft bei Eintritt in den Sprühturm: 250° C.
- Temperatur der Luft bei Austritt aus dem Sprühturm: 98° C.
- Temperatur des flüssigen Kaffeeweißers bei Eintritt in den Sprühturm: 15° C.
- Sprührate: 250 kg/Stunde.

Nach dem Auskühlen des Sprühproduktes wurden 5,2 g Kaffeeweißer mit 130 ml Wasser von 70°C bis 75° C aufgegossen. Es entstand ein feinporiger, dichter und leicht glänzender Schaum.

### Beispiel 2

Gemäß der folgenden Rezeptur wurde hier wie in Beispiel 1 eine flüssige Mischung hergestellt. Die Mischung wurde mit einem TS-Gehalt von 32,78 % versprüht.

| Inhaltsstoffe | Gewichts-% Trockenmasse |
|---|---|
| Magermilch-Trockenmasse | 68,35 |
| Lactose | 17,10 |
| Pflanzenfett | 12,55 |
| Natriumcaseinat | 1,57 |
| Dinatriumorthophosphat | 0,43 |

Dinatriumorthophosphat und Natriumcaseinat wurden mit Lactose vorgemischt, Pflanzenfett wurde geschmolzen. Dem Magermilchkonzentrat mit einem Trockenmassegehalt von 25 % und einer Temperatur von ca. 50° C wurde zunächst das flüssige Pflanzenfett und anschließend die Trockenstoffe über einen Strahlmischer zugesetzt.

Die Mischung wurde 30 Minuten bei 75° C pasteurisiert und anschließend homogenisiert. Die Homogenisierung erfolgte zweistufig:

| | |
|---|---|
| - 1. Stufe: | 175 bar |
| - 2. Stufe: | 35 bar |

Der Mix wurde über einen Wärmetauscher zur Düse gepumpt und dabei auf 70° C temperiert. Stickstoff wurde mit 50 bar über eine Düse in den Produktstrom injiziert, der mit 40 bar der Sprühdüse zugeführt wurde. Die Gasmenge betrug 0,34 kg N₂ auf 1000 kg Trockenstoff in der Mischung.

Die Austrittsöffnung der verwendeten Düse hatte einen Durchmesser von 4,5 mm, der Sprühwinkel betrug etwa 70°. Im folgenden sind die Sprühparameter festgehalten:
- Temperatur der Luft bei Eintritt in den Sprühturm: 220°C.
- Temperatur der Luft bei Austritt aus dem Sprühturm: 91°C.
- Temperatur des flüssigen Kaffeeweißers bei Eintritt in den Sprühturm: 70°C.
- Sprühgeschwindigkeit: 1200 kg/Stunde.

Beim Aufgießen des Produktes ergab sich ein weicher, luftiger und stabiler Schaum.

### Beispiel 3 (Vergleichsbeispiel)

In diesem Vergleichsbeispiel zur Herstellung eines schäumenden Kaffeeweißers erfolgte die Sprühtrocknung mittels einer Scheibe. Es wurde nach folgender Rezeptur eine Mischung mit einem Trockenstoffgehalt von 36 % hergestellt und versprüht:

| | |
|---|---|
| Magermilch-TS | 50,0 |
| Lactose RAB 200^{*} | 30,7 |
| Fett SH 545 | 17,0 |
| Natriumcaseinat | 1,7 |
| Dinatriumorthophosphat | 0,6 |
| | 1̅0̅0̅,̅0̅ |

| | |
|---|---|
| *leichter löslich als CE 200. | |

Lactose und Phosphat wurden in heißem Wasser gelöst und das Magermilchkonzentrat mit einem Trockenstoffgehalt von 35 % hinzugemischt. Die Flüssigkeit wurde über eine Kolloidmühle gegeben und dabei das Caseinat hinzugegeben. Gleichzeitig wurde Fett im Wasserbad geschmolzen und mit der Flüssigkeit vermischt, die dann wiederum über eine Kolloidmühle gegeben wurde.

Anschließend wurde die Mischung in einem doppelwandigen Tank (heißwasserbeheizt) über einen Schabel-Wärmeaustauscher geleitet und in den Tank zurückgeführt. Innerhalb von 30 Minuten wurde eine Temperatur von 75°C erreicht. Die Homogenisierung erfolgte zweistufig, in der ersten Stufe mit einem Druck von 135 bar und in der zweiten Stufe mit einem Druck von 40 bar. Kohlendioxid wurde über ein Laserstrahl-perforiertes Metall zugeführt. Versprüht wurde mit einer Krausescheibe. Die Produkttemperatur beim Eintritt in den Sprühturm betrug 80°C, die Lufteintrittstemperatur 180°C und die Luftaustrittstemperatur 88°C. Es wurden drei Chargen zubereitet, wobei zur Charge I kein CO₂. zur Charge II weniger als 1 l/min CO₂ und zur Charge III 2 l/min CO₂ hinzugefügt wurden. Die anschließenden Aufgießversuche zeigten, daß in keiner der drei Chargen eine Schaumbildung erfolgte. Charge III zeigte aufgrund des sehr schlechten Rieselverhaltens eine schwierige Agglomeration. Das Sprühprodukt war gut benetzbar, ergab beim Aufgießen jedoch keinen Schaum.

Das Sprühprodukt aus der Scheibentrocknung ließ unter dem Mikroskop keine Kügelchen erkennen und war ein staubiges, mehliges Pulver aus zerfetzten aufgerissenen Teilchen.

Wurde der Feinanteil aus einem mittels Scheibentrocknung gewonnenen Sprühprodukts zurückgeführt, ergab sich unter dem Mikroskop ein Agglomeratcharakter mit dichten, kompakten und kleinen Kügelchen.

Die Sprühtrocknung mittels Scheibe war zur Herstellung eines schaumbildenden Creamers nicht geeignet. Ohne Druck ist es nicht möglich, Kohlendioxid in den Kügelchen zu binden. Das in vorstehender Weise hergestellte, pulverförmige Produkt ist Bestandteil bei der Zubereitung von Kaffee-Getränken. Insbesondere ist es möglich, unter Verwendung dieses schäumenden Kaffeeweißers ein Fertigprodukt herzustellen, welches portionsweise für den unmittelbaren Verzehr durch Zugabe von heißem Wasser geeignet ist. Zu diesem Zweck besteht das gebrauchsfertige pulverförmige Gemisch aus dem vorstehend beschriebenen Kaffeeweißer, löslichem Kaffeepulver, insbesondere durch Gefriertrocknen hergestelltem Kaffeepulver und weiteren Zutaten. Eine dieser weiteren Zutaten ist erfindungsgemäß Lactose. Es hat sich überraschenderweise herausgestellt, daß durch die Zugabe von Lactose zu dem Fertigprodukt - unabhängig von Lactose-Bestandteilen in dem Kaffeeweißer - eine deutliche Geschmacksverbesserung des fertigen Kaffeegetränks vom Typ "Cappuccino" erreicht wird.

Eine besonders vorteilhafte Mischung des gebrauchsfertigen Pulvers für die Herstellung von Cappuccino-Getränken ist wie folgt zusammengesetzt:

| | |
|---|---|
| Kaffeeweißer gemäß Erfindung | 50,186 Gew.-% |
| Saccharose | 23,838 Gew.-% |
| Instant-Kaffee | 17,000 Gew.-% |
| Lactose | 8,493 Gew.-% |
| Aroma | 0,483 Gew.-% |

Der Zusatz von Lactose liegt demnach in Bereich von 5 % bis 10 %, bezogen auf die Gesamtmenge des Pulvergemisches. Vorzugsweise beträgt der Anteil an Lactose etwa 8,5 %. Das vorstehend verwendete Aroma ist ein Karamelaroma in handelsüblicher Ausführung.

Die vorstehenden Komponenten des pulverförmigen Gemisches werden erfindungsgemäß in trocknem Zustand miteinander vermischt. Die Komponenten werden zu diesem Zweck mit den vorgegebenen Gewichtsanteilen in einen geeigneten Mischer, insbesondere einen Nauta-Mischer, eingegeben und intensiv miteinander vermischt. Die Mischdauer beträgt vorzugsweise 10 min bis 20 min.

## Patentansprüche

1. Pulverförmige Mischung für die Zubereitung von Kaffeegetränken des Typs "Cappuccino" durch Zugabe von heißem Wasser, **gekennzeichnet durch** ein Gemisch aus wasserlöslichem Instantkaffee, Saccharose, Lactose und einem schäumenden Kaffeeweißer aus durch Sprühtrocknen mittels Düse einer wässrigen Mischung, durch Agglomerieren und durch Zufuhr von Gas hergestelltem Pulver, das die Struktur von blasigen Kügelchen und folgende Bestandteile aufweist:
| | |
|---|---|
| Magermilch-Trockensubstanz | 40 Gew.-% bis 65 Gew.-% |
| Lactose | 25 Gew.-% bis 35 Gew. -% |
| Fett | 10 Gew.-% bis 20 Gew.-% |
| Caseinat | 1,0 Gew.-% bis 2,5 Gew.-% |
| Alkalinphosphat | 0,2 Gew.-% bis 1,0 Gew.-% |

2. Pulverförmige Mischung für die Zubereitung von Kaffeegetränken des Typs "Cappuccino" nach Anspruch 1, dadurch gekennzeichnet, daß Lactose in einem Umfang von 5 Gew.-% bis 10 Gew.-% - bezogen auf die Gesamtmenge des pulverförmigen Gemisches - zugesetzt ist, insbesondere 8,5 Gew.-%.

3. Pulverförmige Mischung für die Zubereitung von Kaffeegetränken des Typs "Cappuccino" nach Anspruch 1 oder 2 , gekennzeichnet durch folgende Zusammensetzung
| | |
|---|---|
| Kaffeeweißer gemäß Erfindung | 50,186 Gew.-% |
| Saccharose | 23,838 Gew.-% |
| Instant-Kaffee | 17,000 Gew.-% |
| Lactose | 8,493 Gew.-% |
| Aroma | 0,483 Gew.-% |

4. Verfahren zum Herstellen eines schäumenden Kaffeeweißers zur Verwendung in einer pulverförmigen Mischung für die Zubereitung von Kaffeegetränken des Typs "Cappuccino" nach einem der Anspruche 1-3, gekennzeichnet durch folgende Maßnahmen:
- eine Mischung der Bestandteile wird in Wasser hergestellt,
- die Mischung wird bei einer Temperatur von 70° bis 80° Grad pasteurisiert,
- nach der Pasteurisation wird die Mischung mehrstufig homogenisiert, dann wird
- der Mischung unmittelbar vor einer Sprühtrocknungseinrichtung CO₂ oder N₂ zugesetzt, und schließlich wird
- das Gemisch mittels Düse sprühgetrocknet.

5. Verfahren nach Anspruch 4, dadurch gekennzeichnet, daß man die Mischung bei einer Temperatur von 70°C bis 80°C, insbesondere von 75°C bis 80°C, über einen Zeitraum von 45 min bis 90 min, insbesondere von 60 min, pasteurisiert.

6. Verfahren nach einem der Ansprüche 4 und 5, dadurch gekennzeichnet, daß man die Mischung zweistufig homogenisiert.

7. Verfahren nach einem der Ansprüche 4 bis 6, dadurch gekennzeichnet, daß man die Mischung in der ersten Stufe bei einem Druck von 120 bar bis 175 bar und in der zweiten Stufe bei einem Druck von 35 bar bis 45 bar homogenisiert.

8. Verfahren nach einem der Ansprüche 4 bis 7, dadurch gekennzeichnet, daß man die Mischung in einer weiteren, dritten Stufe homogenisiert, vorzugsweise bei einem Druck von etwa 25 bar bis 35 bar.

9. Verfahren nach einem der Ansprüche 4 bis 8, dadurch gekennzeichnet, daß man die Mischung mit einem Druck von etwa 30 bar bis 50 bar, insbesondere von ca. 45 bar einer das CO₂ oder N₂ zusetzenden Imprägnierungsdüse zuleitet.

10. Verfahren nach einem der Ansprüche 4 bis 9, dadurch gekennzeichnet, daß man in die Mischung das CO₂ oder N₂ mit Druck einpreßt, wobei das Druckverhältnis Mischung zu eingepreßtem CO₂ oder N₂ auf 1 zu 1,1 bis 2 eingestellt wird.

11. Verfahren nach Anspruch 10, dadurch gekennzeichnet, daß man das Druckverhältnis Mischung zu eingepreßtem CO₂ oder N₂ auf 1 zu 1,4 bis 1,6 einstellt.

12. Verfahren nach Anspruch 10 oder 11, dadurch gekennzeichnet, daß man das CO₂ oder N₂ mit einem Druck von etwa 55 bar in die Mischung einpreßt.

13. Verfahren nach einem der Ansprüche 4 bis 12, dadurch gekennzeichnet, daß man das CO₂ oder N₂ in die zu einer Sprühtrocknungsdüse strömende Mischung in einem Winkel von 30° bis 80° einpreßt.

14. Verfahren nach einem der Ansprüche 4 bis 13, dadurch gekennzeichnet, daß man die Mischung mit dem zugesetzten CO₂ oder N₂ bei einer Temperatur von 10°C bis 80°C versprüht.

15. Verfahren nach einem der Ansprüche 4 bis 14, dadurch gekennzeichnet, daß man die Sprühtrocknung von der Mischung mit dem zugesetzten CO₂ oder N₂ im Gleichstromverfahren vornimmt, wobei die Lufteintrittstemperatur 150°C bis 250°C, insbesondere 185°C, und die Luftaustrittstemperatur maximal ca. 100°C, vorzugsweise 95°C, betragen.

16. Verfahren zum Herstellen einer pulverförmigen Mischung für die Zubereitung von Kaffeegetränken des Typs "Cappuccino" nach einem oder mehreren der Ansprüche 1, 2 und 3, dadurch gekennzeichnet, daß die Gemischkomponenten, nämlich erfindungsgemäßer Kaffeeweißer, wasserlöslicher Kaffee (Instant-Kaffee) und Saccharose sowie gegebenenfalls Aromastoffe trocken miteinander vermischt werden, insbesondere in einem Nauta-Mischer, bei einer Mischdauer von vorzugsweise 10 min bis 20 min.

17. Verwendung einer auf einen Trockenmassegehalt von 30% bis 47%, vorzugsweise 41%, eingestellten wässrigen Mischung, gekennzeichnet durch folgende Bestandteile:
| | |
|---|---|
| Magermilchkonzentrat | 20 Gew.-% bis 85 Gew.-% |
| Lactose | 20 Gew.-% bis 50 Gew.-% |
| Pflanzenfett | 5 Gew.-% bis 35 Gew.-% |
| Caseinat | 0,5 Gew.-% bis 2,5 Gew.-% |
| Alkalinphosphat | 0,1 Gew.-% bis 0,6 Gew.-% |
zum Herstellen eines für die Zubereitung von Kaffeegetränken des Typs "Cappuccino" verwendeten schäumenden Kaffeeweißers.

18. Vorrichtung zum Herstellen eines schäumenden Kaffee-weißers zur Verwendung in der pulverförmigen Mischung für die Zubereitung von Kaffeegetränken des Typs "Cappuccino" insbesondere nach einem der Ansprüche 1 bis 17, gekennzeichnet durch einen Mischtank (5), einem mit dem Mischtank (5) in Verbindung stehenden, diesem nachgeschalteten und zur Pasteurisierung der erhaltenen Mischung vorgesehenen Wärmetauscher (10), wenigstens zwei hintereinandergeschalteten, dem Wärmetauscher (10) nachgeordneten und zur Homogenisierung der pasteurisierten Mischung vorgesehenen Homogenisierungsstufen (18, 20), wobei die erste Homogenisierungsstufe (18) mit dem Wärmetauscher (10) kommuniziert, eine mit der letzten Homogenisierungsstufe (20) in Verbindung stehende, dieser nachgeschaltete und zur Imprägnierung der homogenisierten Mischung vorgesehene CO₂- oder N₂-Imprägnierungseinrichtung (Düse 26) sowie eine sich unmittelbar an die Düse (26) anschließende und zur Sprühtrocknung der mit CO₂ oder N₂ versetzten Mischung vorgesehene Sprühtrocknungskolonne (27).

19. Vorrichtung nach Anspruch 18, dadurch gekennzeichnet, daß der Mischtank (5) über eine Leitung (2) mit einem diesem vorgeordneten Verdampfer (1) für Magermilch verbunden ist.

20. Vorrichtung nach Anspruch 19, dadurch gekennzeichnet, daß in der Leitung (2) zwischen Verdampfer (1) und Mischtank (5) ein Konzentrattank (3) angeordnet ist, insbesondere mit einer das Magermilchkonzentrat aus dem Konzentrattank (3) in den Mischtank (5) fördernden Pumpe (4) oder dergleichen.

21. Vorrichtung nach einem der Ansprüche 18 bis 20, dadurch gekennzeichnet, daß in einer Leitung (7) zwischen Mischtank (5) und Wärmetauscher (10) eine Abzweigung (Dreiwegeventil 9) vorgesehen ist, die über eine zweite, die aus dem Mischtank (5) mittels Pumpe (8) oder dergleichen geförderte Mischung in diesen rückführende Leitung (11) mit dem Mischtank (5) kommuniziert.

22. Vorrichtung nach Anspruch 21, dadurch gekennzeichnet, daß die zweite Leitung (11) mit einem Strahlmischer (12) oder dergleichen versehen ist, über den Trockenstoffe und/oder fließfähiges Fett, Pflanzenfett in den Mischtank (5) einbringbar sind.

23. Vorrichtung nach Anspruch 22, dadurch gekennzeichnet, daß ein Trockenstoffbehälter (13) sowie ein für das Pflanzenfett vorgesehener Schmelzbehälter (14) mit dem Strahlmischer (12) über ein Dreiwegeventil (15) verbunden sind.

24. Vorrichtung nach einem der Ansprüche 18 bis 23, dadurch gekennzeichnet, daß jeder Homogenisierungsstufe (18, 20) ein Vorlaufbehälter (17, 19) vorgeordnet ist, wobei der Vorlaufbehälter (17) der ersten Homogenisierungsstufe (18) in einer Leitung (16) zwischen Wärmetauscher (10) und erster Homogenisierungsstufe (18) angeordnet ist.

25. Vorrichtung nach einem der Ansprüche 18 bis 24, dadurch gekennzeichnet, daß der zweiten Homogenisierungsstufe (20) mindestens eine weitere Homogenisierungsstufe nachgeordnet ist.

26. Vorrichtung nach einem der Ansprüche 18 bis 25, dadurch gekennzeichnet, daß in einer Leitung (21) zwischen letzter Homogenisierungsstufe (20) und Sprühtrocknungskolonne (27) ein zur Kühlung der homogenisierten Mischung vorgesehener Wärmetauscher (22), ein Vorlauftank (23) mit einer sich anschließenden Pumpe (24) oder dergleichen sowie ein zur Aufheizung der bereitzustellenden Mischung vorgesehener Wärmetauscher (25) angeordnet sind.

27. Vorrichtung nach einem der Ansprüche 18 bis 26 dadurch gekennzeichnet, daß die als CO₂- oder N₂-Imprägnierungseinrichtung vorgesehene Düse (26) unmittelbar vor der Sprühtrocknungskolonne (27) in der Leitung (21) zwischen der letzten Homogenisierungsstufe (20) und der Sprühtrocknungskolonne (27) angeordnet ist.

28. Vorrichtung nach Anspruch 27, dadurch gekennzeichnet, daß die Düse (26) als in Strömungsrichtung (Pfeil 33) der Mischung weisende Sprühkegeldüse (29) ausgebildet ist.

29. Vorrichtung nach Anspruch 27, dadurch gekennzeichnet, daß die Düse (26) als im wesentlichen in Strömungsrichtung (Pfeil 33) der Mischung weisende Zuführleitung (30) für das CO₂ oder N₂ mit einem an deren Ende (31) angebrachten Verteilerkörper (32) ausgebildet ist.

## Claims

1. Powdered mixture for the preparation of coffee beverages of the "cappuccino" type by addition of hot water, characterized by a mixture of water-soluble instant coffee, sucrose, lactose and a foaming coffee whitener made of a powder produced by spray-drying an aqueous mixture using a nozzle, by agglomeration and by addition of gas, which powder has the structure of small aerated spheres and contains the following components:
| | |
|---|---|
| skimmed milk dry substance | 40 % by weight to 65 % by weight |
| lactose | 25 % by weight to 35 % by weight |
| fat | 10 % by weight to 20 % by weight |
| caseinate | 1.0 % by weight to 2.5 % by weight |
| alkali phosphate | 0.2 % by weight to 1.0 % by weight |

2. Powdered mixture for the preparation of coffee beverages of the "cappuccino" type according to Claim 1, characterized in that lactose is added in an amount of 5 % by weight to 10 % by weight - based on the total amount of the powdered mixture in particular 8.5 % by weight.

3. Powdered mixture for the preparation of coffee beverages of the "cappuccino" type according to Claim 1 or 2, characterized by the following composition:
| | |
|---|---|
| coffee whitener according to the invention | 50.186 % by weight |
| sucrose | 23.838 % by weight |
| instant coffee | 17.000 % by weight |
| lactose | 8.493 % by weight |
| aroma | 0.483 % by weight |

4. Process for producing a foaming coffee whitener for use in a powdered mixture for the preparation of coffee beverages of the "cappuccino" type according to one of Claims 1 - 3, characterized by the following steps:
- preparing a mixture of the components in water,
- pasteurizing the mixture at a temperature of 70°C to 80°,
- multistep homogenization of the mixture after pasteurization, subsequently
- adding CO₂ or N₂ to the mixture immediately before a spray-drying device, and finally
- spray-drying the mixture using a nozzle.

5. Process according to Claim 4, characterized in that the mixture is pasteurized at a temperature of 70°C to 80°C, especially 75°C to 80°C, for a period of 45 min to 90 min, especially 60 min.

6. Process according to one of Claims 4 and 5, characterized in that the mixture is homogenized in two steps.

7. Process according to one of Claims 4 to 6, characterized in that the mixture is homogenized in the first step at a pressure of 120 bar to 175 bar and in the second step at a pressure of 35 bar to 45 bar.

8. Process according to one of Claims 4 to 7, characterized in that the mixture is homogenized in a further third step, preferably at a pressure of about 25 bar to 35 bar.

9. Process according to one of Claims 4 to 8, characterized in that the mixture is fed with a pressure of about 30 bar to 50 bar, especially of about 45 bar, to an impregnating nozzle which is adding the CO₂ or N₂.

10. Process according to one of Claims 4 to 9, characterized in that the CO₂ or N₂ is pressed with pressure into the mixture, the pressure ratio of mixture and pressed-in CO₂ or N₂ being adjusted to between 1 to 1.1 and 1 to 2.

11. Process according to Claim 10, characterized in that the pressure ratio of mixture and pressed-in CO₂ or N₂ is adjusted to between 1 to 1.4 and 1 to 1.6.

12. Process according to Claim 10 or 11, characterized in that the CO₂ or N₂ is pressed into the mixture with a pressure of about 55 bar.

13. Process according to one of Claims 4 to 12, characterized in that the CO₂ or N₂ is pressed at an angle of 30° to 80° in to the mixture flowing to a spray-drying nozzle.

14. Process according to one of Claims 4 to 13, characterized in that the mixture with the added CO₂ or N₂ is sprayed at a temperature of 10°C to 80°C.

15. Process according to one of Claims 4 to 14, characterized in that spray-drying the mixture with the added CO₂ or N₂ is conducted according to the co-current flow method, the air inflow temperature being 150°C to 250°C, especially 185°C, and the air outflow temperature being maximally about 100°C, preferably 95°C.

16. Process for producing a powdered mixture for the preparation of coffee beverages of the "cappuccino" type according to one or more of Claims 1, 2 and 3, characterized in that the components of the mixture, namely coffee whitener according to the invention, water-soluble coffee (instant coffee) and sucrose as well as, if required, aroma substances, are mixed with one another in the dry state, especially in a Nauta mixer, for a mixing period of preferably 10 min to 20 min.

17. Use of an aqueous mixture, adjusted to a dry matter content of 30% to 47%, preferably 41%, characterized by the following components:
| | |
|---|---|
| skimmed milk concentrate | 20 % by weight to 85 % by weight |
| lactose | 20 % by weight to 50 % by weight |
| plant fat | 5 % by weight to 35 % by weight |
| caseinate | 0.5 % by weight to 2.5 % by weight |
| alkali phosphate | 0.1 % by weight to 0.6 % by weight |
for producing a foaming coffee whitener used for the preparation of coffee beverages of the "cappuccino" type.

18. Apparatus for producing a foaming coffee whitener for use in the powdered mixture for the preparation of coffee beverages of the "cappuccino" type, especially according to one of Claims 1 to 17, characterized by a mixing tank (5); a heat exchanger (10) for pasteurizing the obtained mixture which is linked to the mixing tank (5) and which is located downstream thereof; at least two series-connected homogenization steps (18,20) downstream of the heat exchanger (10) for homogenizing the pasteurized mixture, the first homogenization step (18) communicating with the heat exchanger (10); a CO₂ or N₂ impregnating device (nozzle 26) located downstream of and being linked to the last homogenization step (20) for impregnating the homogenized mixture; and a spray-drying column (27) directly following the nozzle (26) for spray-drying the mixture with the added CO₂ or N₂.

19. Apparatus according to Claim 18, characterized in that the mixing tank (5) is linked via a line (2) to a vaporizer(1) for skimmed milk located upstream of this mixing tank (5).

20. Apparatus according to Claim 19, characterized in that a concentrate vessel (3) is arranged in the line (2) between vaporizer (1) and mixing tank (5), particularly with a pump (4) or the like conveying the skimmed milk concentrate from the concentrate tank (3) into the mixing tank (5).

21. Apparatus according to one of Claims 18 to 20, characterized in that a junction (three-way valve 9) is disposed in a line (7) between mixing tank (5) and heat exchanger (10), which junction communicates with the mixing tank (5) via a second line (11) which returns the mixture being conveyed out of the mixing tank (5) via a pump (8) or the like back to the mixing tank (5).

22. Apparatus according to Claim 21, characterized in that the second line (11) is provided with a jet mixer (12) or the like through which dry substances and/or flowable fat, plant fat is introducible to the mixing tank (5).

23. Apparatus according to Claim 22, characterized in that a dry substance vessel (13) and a melting vessel (14) for the plant fat are linked to the jet mixer (12) via a three-way valve (15).

24. Apparatus according to one of Claims 18 to 23, characterized in that a forerun tank (17,19) is located upstream of each homogenization step (18,20), the forerun tank (17) of the first homogenization step (18) being arranged in a line (16) between heat exchanger (10) and first homogenization step (18).

25. Apparatus according to one of Claims 18 to 24, characterized in that at least one further homogenization step follows the second homogenization step (20).

26. Apparatus according to one of Claims 18 to 25, characterized in that a heat exchanger (22) for cooling the homogenized mixture; a forerun tank (23) with a following pump (24) or the like; and a heat exchanger (25) for heating the mixture to be held ready are arranged in a line (21) between the last homogenization step (20) and the spray-drying column (27).

27. Apparatus according to one of Claims 18 to 26, characterized in that the nozzle (26) provided as a CO₂ or N₂ impregnating device is arranged directly before the spray-drying column (27) in the line (21) between the last homogenization step (20) and the spray-drying column (27).

28. Apparatus according to Claim 27, characterized in that the nozzle (26) is designed as a spray cone nozzle (29) pointing in the flowing direction (arrow 33) of the mixture.

29. Apparatus according to Claim 27, characterized in that the nozzle (26) is designed as a feed line (30) for the CO₂ or N₂, essentially pointing in the flowing direction (arrow 33) of the mixture,with a distributing body (32) being attached to the end (31) of said feed line (30).

## Revendications

1. Mélange pulvérulent pour la préparation de boissons à base de café du type "cappuccino" par addition d'eau chaude, caractérisé par un mélange de café instantané soluble dans l'eau, de saccharose, de lactose et d'un agent blanchissant le café moussant à base d'une poudre qui est préparée par séchage par pulvérisation au moyen d'un ajutage d'un mélange aqueux, par agglomération et par amenée de gaz et qui présente la structure de sphérules vésiculaires et les constituants suivants :
| | |
|---|---|
| Matière sèche de lait maigre | 40 à 65 % en poids |
| Lactose | 25 à 35 % en poids |
| Graisse | 10 à 20 % en poids |
| Caséinate | 1,0 à 2,5 % en poids |
| Phosphate de métal alcalin | 0,2 à 1,0 % en poids. |

2. Mélange pulvérulent pour la préparation de boissons à base de café du type "cappuccino" suivant la revendication 1, caractérisé en ce que le lactose est ajouté dans une mesure de 5 % en poids à 10 % en poids, en particulier de 8,5 % en poids, par rapport à la quantité globale du mélange pulvérulent.

3. Mélange pulvérulent pour la préparation de boissons à base de café du type "cappuccino" suivant l'une des revendications 1 et 2, caractérisé par la composition suivante :
| | |
|---|---|
| Agent blanchissant le café suivant l'invention | 50,186 % en poids |
| Saccharose | 23,838 % en poids |
| Café instantané | 17,000 % en poids |
| Lactose | 8,493 % en poids |
| Arôme | 0,483 % en poids. |

4. Procédé de préparation d'un agent blanchissant le café moussant à utiliser dans un mélange pulvérulent pour la préparation de boissons à base de café du type "cappuccino" suivant l'une des revendications 1 à 3, caractérisé par les mesures suivantes :
- un mélange des constituants est préparé dans l'eau,
- le mélange est pasteurisé à une température de 70 à 80°C,
- après la pasteurisation, le mélange est homogénéisé en plusieurs étapes, puis
- du CO₂ ou du N₂ est ajouté au mélange directement en amont d'un dispositif de séchage par pulvérisation, et enfin
- le mélange est séché par pulvérisation au moyen d'un ajutage.

5. Procédé suivant la revendication 4, caractérise en ce qu'on pasteurise le mélange à une température de 70 à 80°C, en particulier de 75 à 80°C, pendant un intervalle de temps de 45 minutes à 90 minutes, en particulier de 60 minutes.

6. Procédé suivant l'une des revendications 4 et 5, caractérisé en ce qu'on homogénéise le mélange en deux étapes.

7. Procédé suivant l'une des revendications 4 à 6, caractérisé en ce qu'on homogénéise le mélange dans la première étape à une pression de 120 bars à 175 bars et dans la deuxième étape à une pression de 35 bars à 45 bars.

8. Procédé suivant l'une des revendications 4 à 7, caractérisé en ce qu'on homogénéise le mélange dans une troisième étape supplémentaire, de préférence à une pression d'environ 25 bars à 35 bars.

9. Procédé suivant l'une des revendications 4 à 8, caractérisé en ce qu'on amène le mélange à une pression d'environ 30 bars à 50 bars, en particulier d'environ 45 bars, à un ajutage d'imprégnation fournissant du CO₂ ou du N₂.

10. Procédé suivant l'une des revendications 4 à 9, caractérisé en ce qu'on injecte dans le mélange le CO₂ ou le N₂ sous pression, le rapport de pression entre le mélange et le CO₂ ou N₂ injecté étant ajusté à 1 pour 1,1 à 2.

11. Procédé suivant la revendication 10, caractérisé en ce qu'on ajuste le rapport de pression entre le mélange et le CO₂ ou N₂ injecté à 1 pour 1,4 à 1,6.

12. Procédé suivant l'une des revendications 10 et 11, caractérisé en ce qu'on injecte dans le mélange le CO₂ ou N₂ avec une pression d'environ 55 bars.

13. Procédé suivant l'une des revendications 4 à 12, caractérisé en ce qu'on injecte le CO₂ ou N₂ dans le mélange qui s'écoule vers un ajutage de séchage par pulvérisation, sous un angle de 30° à 80°.

14. Procédé suivant l'une des revendications 4 à 13, caractérisé en ce qu'on pulvérise le mélange avec le CO₂ ou N₂ ajouté, à une température de 10°C à 80°C.

15. Procédé suivant l'une des revendications 4 à 14, caractérisé en ce qu'on effectue le séchage par pulvérisation du mélange avec le CO₂ ou N₂ ajouté dans un procédé à courants parallèles, la température d'entrée d'air étant de 150 à 250°C, en particulier de 185°C, et la température de sortie d'air étant au maximum d'environ 100°C, de préférence de 95°C.

16. Procédé de préparation d'un mélange pulvérulent pour la réalisation de boissons à base de café du type "cappuccino" suivant une ou plusieurs des revendications 1, 2 et 3, caractérisé en ce que les composants du mélange, à savoir l'agent blanchissant le café suivant l'invention, le café soluble dans l'eau (café instantané) et le saccharose ainsi qu'éventuellement des substances aromatiques, sont mutuellement mélangés à sec, en particulier dans un mélangeur Nauta, pendant une durée de mélange de préférence de 10 minutes à 20 minutes.

17. Utilisation d'un mélange aqueux ajusté à une teneur en matière sèche de 30 à 47 %, de préférence de 41 %, caractérisé par les éléments suivants :
| | |
|---|---|
| Concentré de lait maigre | 20 à 85 % en poids |
| Lactose | 20 à 50 % en poids |
| Graisse végétale | 5 à 35 % en poids |
| Caséinate | 0,5 à 2,5 % en poids |
| Phosphate de métal alcalin | 0,1 à 0,6 % en poids |
pour la préparation d'un agent blanchissant le café moussant, utilisé pour la réalisation de boissons à base de café du type "cappuccino".

18. Dispositif de préparation d'un agent blanchissant le café moussant à utiliser dans le mélange pulvérulent prévu pour la réalisation de boissons à base de café du type "cappuccino", en particulier suivant une des revendications 1 à 17, caractérisé par un réservoir de mélange (5), un échangeur de chaleur (10), qui est en communication avec le réservoir de mélange (5), est monté on aval de ce dernier et est prévu pour la pasteurisation du mélange obtenu, au moins deux étages d'homogénéisation (18, 20) qui sont montés l'un derrière l'autre, sont agencés en aval de l'échangeur de chaleur (10) et sont prévus pour l'homogénéisation du mélange pasteurisé, le premier étage d'homogénéisation (18) communiquant avec l'échangeur de chaleur (10), un dispositif d'imprégnation par du CO₂ ou du N₂ (ajutage 26) qui est en communication avec le dernier étage d'homogénéisation (20), est monté en aval de ce dernier et est prévu pour l'imprégnation du mélange homogénéisé, ainsi que par une colonne de séchage par pulvérisation (27) qui est directement raccordée à l'ajutage (26) et est prévue pour le séchage par pulvérisation du mélange additionné de CO₂ ou de N₂.

19. Dispositif suivant la revendication 18, caractérisé en ce que le réservoir de mélange (5) est, par l'intermédiaire d'un conduit (2), relié à un évaporateur (1) pour le lait maigre qui est agencé en amont de ce réservoir.

20. Dispositif suivant la revendication 19, caractérisé en ce que, dans le conduit (2) entre l'évaporataur (1) et le réservoir de mélange (5), est agencé un réservoir à concentré (3), en particulier avec une pompe (4) ou élément analogue qui refoule le concentré de lait maigre du réservoir à concentré (3) dans le réservoir de mélange (5).

21. Dispositif suivant l'une des revendications 18 à 20, caractérisé en ce que, dans un conduit (7) situé entre le réservoir de mélange (5) et l'échangeur de chaleur (10), est prévu un embranchement (vanne à trois voies 9) qui communique avec le réservoir de mélange (5) par l'intermédiaire d'un deuxième conduit (11) qui recycle le mélange refoulé du réservoir de mélange (5) au moyen d'une pompe (8) ou d'un élément analogue dans ce réservoir de mélange.

22. Dispositif suivant la revendication 21, caractérisé en ce que le deuxième conduit (11) est pourvu d'un mélangeur à jet (12) ou d'un élément analogue par l'intermédiaire duquel des matières sèches et/ou de la graisse capable de s'écouler, de la graisse végétale, peuvent être introduites dans le réservoir de mélange (5).

23. Dispositif suivant la revendication 22, caractérisé en ce qu'un récipient à matière sèche (13) ainsi qu'un récipient à masse fondue (14) prévu pour la graisse végétale sont reliés au mélangeur à jet (12) par l'intermédiaire d'une vanne à trois voies (15).

24. Dispositif suivant l'une des revendications 18 à 23, caractérisé en ce qu'en amont de chaque étage d'homogénéisation (18, 20) est monté un récipient d'entrée (17, 19), le récipient d'entrée (17) du premier étage d'homogénéisation (18) étant agencé dans un conduit (16) entre l'échangeur de chaleur (10) et le premier étage d'homogénéisation (18).

25. Dispositif suivant l'une des revendications 18 à 24, caractérisé en ce qu'en aval du deuxième étage d'homogénéisation (20) est monté au moins un autre étage d'homogénéisation.

26. Dispositif suivant l'une des revendications 18 à 25, caractérisé en ce que, dans un conduit (21) situé entre le dernier étage d'homogénéisation (20) et la colonne de séchage par pulvérisation (27), sont agencés un échangeur de chaleur (22) prévu pour refroidir le mélange homogénéisé, un réservoir de tête (23) muni d'une pompe (24) ou élément analogue qui se raccorde à ce réservoir ainsi qu'un échangeur de chaleur (25) prévu pour le chauffage du mélange à tenir prêt.

27. Dispositif suivant l'une des revendications 18 à 26, caractérisé en ce que l'ajutage (26) prévu comme dispositif d'imprégnation par du CO₂ ou du N₂ est agencé directement en amont de la colonne de séchage par pulvérisation (27) dans le conduit (21) prévu entre le dernier étage d'homogénéisation (20) et la colonne de séchage par pulvérisation (27).

28. Dispositif suivant la revendication 27, caractérisé en ce que l'ajutage (26) est réalisé sous la forme d'un ajutage à cône de projection (29) orienté dans le sens d'écoulement (flèche 23) du mélange.

29. Dispositif suivant la revendication 27, caractérisé en ce que l'ajutage (26) est réalisé sous la forme d'un conduit d'amenée (30) pour le CO₂ ou le N₂ qui est orienté sensiblement dans le sens d'écoulement (flèche 23) du mélange et qui est pourvu d'un corps répartiteur (32) agencé à son extrémité (31).
